# EUROPEAN PATENT SPECIFICATION

(11) **EP 3 453 600 B1**
(45) Date of publication and mention of the grant of the patent: **20.09.2023**
(21) Application number: 18185784.8
(22) Date of filing: 26.07.2018
(51) Int. Cl.: B62K 11/04, B62J 6/02, B62J 6/04, G01S 13/93, G08G 1/16, G01S 13/931, H01Q 1/32, H01Q 1/42, B62J 6/022, B62J 45/412, B62J 45/41, B62J 45/42, B62J 17/00, B62J 99/00

(54) **MOTORCYCLE**
MOTORRAD
MOTOCYCLETTE

(30) Priority: 11.09.2017 JP 2017173673
(43) Date of publication of application: 13.03.2019
(60) Divisional application: 21206445.5
(73) Proprietor: KAWASAKI MOTORS, LTD., Akashi-shi, Hyogo 673-8666 (JP)
(72) Inventor: Kato, Hideyuki, Hyogo, 6508670 (JP)
(74) Representative: Wenzel Nemetzade Warthmüller Patentanwälte Part mbB

(56) References cited:
- WO-A1-2016/010689
- WO-A1-2019/180939
- WO-A1-2019/180941
- WO-A1-2019/224960
- DE-A1-102014 213 392
- DE-A1-102015 220 312
- JP-A- 2009 204 592
- JP-A- 2017 039 487
- JP-A- 2017 091 138

## Description

### TECHNICAL FIELD

The present invention mainly relates to a motorcycle with a radar device.

### BACKGROUND ART

Patent Document 1 (Japanese Patent Application Laid-Open No. 2008-110683) discloses a motorcycle with a configuration in which a radar device is arranged in the vicinity of a front fender.

The radar device detects a distance to a front obstacle and a direction where the obstacle exists. JP 2017 091138 A discloses a straddle type vehicle equipped with an alarm system according to the state of the art. DE 10 2015 220 312 A1 discloses a device for warning the driver of a vehicle of blind angles according to the preamble of claim 1. WO 2016/010 689 A1 describes an electronic device for monitoring the blind spot of a motorcycle driver according to the state of the art. JP 2009 204 592 A discloses an obstruction detection apparatus mounted in a vehicle according to the state of the art.

### SUMMARY OF THE INVENTION

### PROBLEMS TO BE SOLVED BY THE INVENTION

However, a radar device of Patent Document 1 is arranged so as to be exposed outward. Therefore, there is a possibility that water, mud and the like may be splashed on the radar device. Depending on a transmission range of an electromagnetic wave of the radar device, there is a possibility that the electromagnetic wave is partly obstructed by a front wheel, etc.

The present invention has been made in view of the circumstances described above. The primary object of the present invention is to provide a motorcycle with a configuration in which a transmission/reception range of an electromagnetic wave of a radar device is sufficiently secured, and the configuration in which water, mud and the like are less likely to be splashed on the radar device.

### MEANS FOR SOLVING THE PROBLEMS

Problems to be solved by the present invention are as described above, and next, means for solving the problems and effects thereof will be described.

In an aspect of the present invention, a motorcycle with the following configuration is provided. That is, the motorcycle includes a headlight, a taillight, and a radar device. The headlight includes a part of material that shields an electromagnetic wave. The taillight includes a part of material that shields the electromagnetic wave. The radar device transmits a transmission wave, which is the electromagnetic wave for detecting the surroundings, forward from a transmission/reception portion, and receives a reflected wave in which the transmission wave is reflected by an object at the transmission/reception portion. The transmission/reception portion of the radar device is covered by a member with the material that transmits the electromagnetic wave, at least in a range where the transmission wave is transmitted. When the radar device for transmitting the transmission wave forward is arranged, in a front view, the radar device is arranged outside a front projection area of the headlight. The motorcycle further comprises: a front radar device as the radar device for transmitting the transmission wave forward; and a front cowl with the material that transmits the electromagnetic wave, wherein the front radar device is covered by the front cowl, wherein a position of the front radar device in the front-back direction is arranged rearward of a front end of the headlight, rearward of an axle of a front wheel, overlaps a shield stay and the headlight, forward of the center of a wind shield, and forward of a meter device.

Accordingly, the radar device is covered by the member with the material that transmits the electromagnetic wave, which can protect the radar device from water, mud and the like without degrading the function of the radar device. A part of material that shields the electromagnetic wave of the headlight and the taillight can prevent the transmission wave of the radar device from being affected.

### EFFECT OF THE INVENTION

According to the present invention, a motorcycle with a configuration in which a transmission/reception range of an electromagnetic wave of a radar device is sufficiently secured, and the configuration in which water, mud and the like are less likely splashed on the radar device can be provided.

### BRIEF DESCRIPTION OF THE DRAWINGS

[Fig. 1] A side view of a motorcycle according to one embodiment of the present invention.
[Fig. 2] A front view of the motorcycle.
[Fig. 3] A plan view of the motorcycle.
[Fig. 4] An enlarged side view of a front part of the motorcycle.
[Fig. 5] An enlarged side view of a rear part of the motorcycle.

### EMBODIMENT FOR CARRYING OUT THE INVENTION

Next, an embodiment of the present invention will be described with reference to the drawings. In the following description, front-back and left-right directions are defined that a forwarding direction of a motorcycle 1 is a front direction (that is, the left-right direction is defined in the direction seen from a driver who got on the motorcycle 1). An upper side and a lower side in a vertical direction are defined as the upper side and the lower side. The terms describing a positional relationship, size, or shape etc. include not only a state in which the meaning of the term is completely satisfied but also a state in which the meaning of the term is substantially satisfied. When it is described that A is mounted to B, its configuration includes not only a configuration in which A is directly mounted to B but also the configuration in which A is mounted to B through another mounting member or the like.

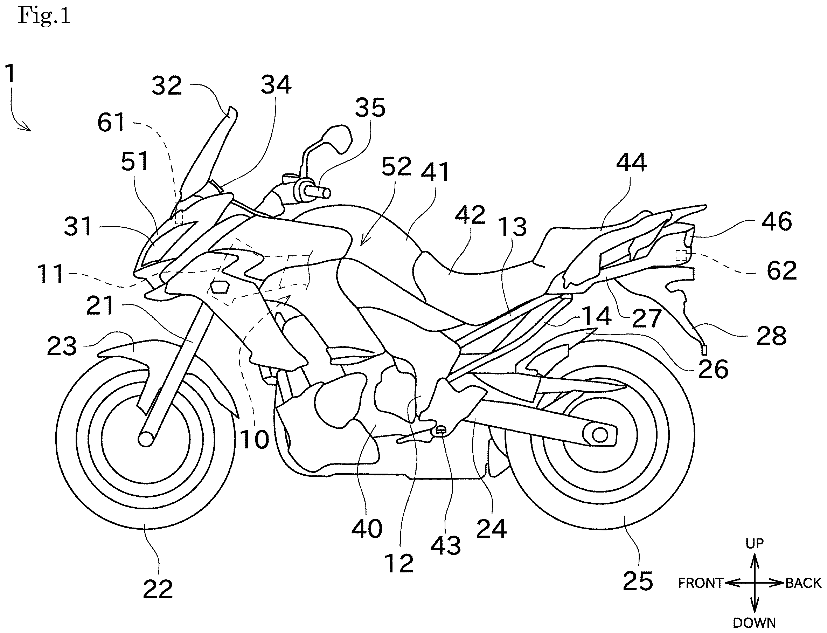

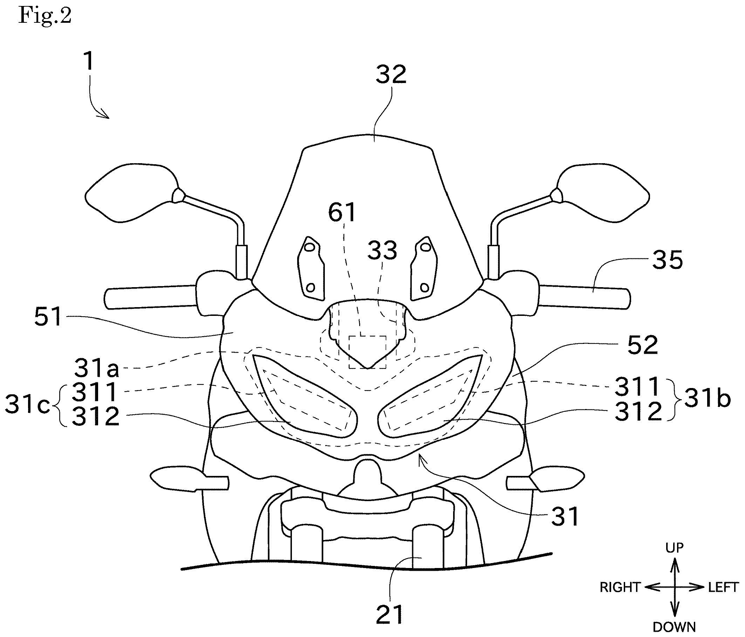

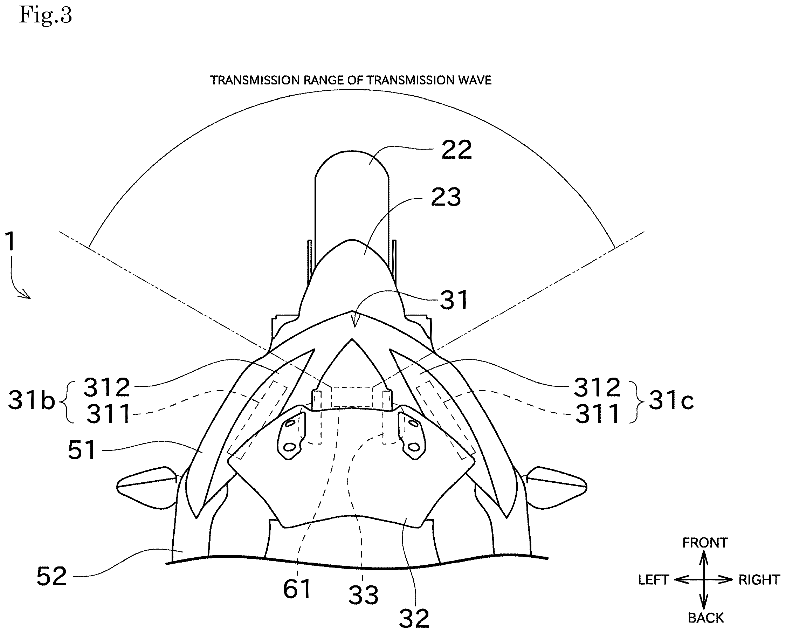

Firstly, an overview of the motorcycle 1 will be described with reference to Fig. 1 to Fig. 3. Fig. 1 is a side view of the motorcycle 1. Fig. 2 is a front view (a drawing viewed in the front) of the motorcycle 1. Fig. 3 is a plan view of the motorcycle. As shown in Fig. 1, the motorcycle 1 includes an engine 40, a front wheel 22, and a rear wheel 25. These members are supported by a body frame 10. Since the body frame 10 is made of metal, eh body frame 10 has the property of shielding an electromagnetic wave. The body frame 10 includes a head pipe frame 11, a main frame 12, a rear frame 13, and a rear stay 14.

When the specification herein describes "a material that shields the electromagnetic wave" or the like, such material includes not only the material that completely shields the electromagnetic wave but also the material that shields the electromagnetic wave to such an extent that there is an adverse influence on a processing using the electromagnetic wave (a detection processing of the surroundings). Similarly, when the specification herein describes "a material that transmits the electromagnetic wave" or the like, such material includes not only the material that completely transmits the electromagnetic wave but also the material that transmits the electromagnetic wave to such an extent that there is little influence on the processing using the electromagnetic wave (the detection processing of the surroundings).

The head pipe frame 11 has a shaft insertion hole for receiving a steering shaft (not shown). An upper bracket and a lower bracket (not shown) are mounted to an upper part and a lower part of the head pipe frame 11 respectively. Each of the upper bracket and the lower bracket has a fork insertion hole for receiving a front fork 21 arranged in pairs on the left and right. With this configuration, the upper bracket and the lower bracket support the front fork 21. A front wheel 22 is rotatably mounted to the lower part of the front fork 21. A front fender 23 is arranged in the upper part of the front wheel 22.

The main frame 12 is connected to the head pipe frame 11. The main frame 12 is arranged in pairs on the left and right. The main frame 12 extends rearward and obliquely downward from a rear part of the head pipe frame 11, and then extends downward. A front part and a rear part of the main frame 12 may be configured from members different from each other. The rear frame 13 and the rear stay 14 in pairs on the left and right are respectively mounted at a middle part of the main frame 12. The rear frame 13 is arranged above the rear stay 14. The rear frame 13 and the rear stay 14 are arranged so as to extend rearward and obliquely upward from the main frame 12.

A swing arm 24 is mounted to the rear part of the main frame 12. A front end of the swing arm 24 is elastically supported by a rear suspension (not shown). The swing arm 24 is arranged so as to extend rearward as shown in Fig. 1. A rear wheel 25 is rotatably mounted to a rear part of the swing arm 24. The power that is generated in the engine 40 is transmitted to the rear wheel 25 via a drive chain (not shown). A rear fender 26 is arranged in the upper part of the rear wheel 25 (near the rear wheel 25). As with the swing arm 24, the rear fender 26 is elastically supported by the rear suspension. When the swing arm 24 and the rear wheel 25 swing, the rear fender 26 swings integrally therewith.

A rear frame cover 27 and a rear flap 28 are further arranged above the rear wheel 25. The rear frame cover 27 and the rear flap 28 are supported by the body frame 10 (the rear frame 13, the rear stay 14). Even when the swing arm 24 and the rear wheel 25 swing, the rear frame cover 27 and the rear flap 28 do not swing integrally therewith. Since the rear frame cover 27 and the rear flap 28 are made of resin, they have a property of transmitting the electromagnetic wave.

The rear frame cover 27 covers the periphery of the rear frame 13 and the rear stay 14 (particularly their rear parts). The rear frame cover 27 is arranged below a rear seat 44 which will be described later. The rear flap 28 is a member for extending rearward and obliquely downward from a lower part of the rear frame cover 27 (extending along an outer peripheral surface of the rear wheel 25). A reflector which reflects the light irradiated from the rear and a license plate etc., are mounted to the rear flap 28.

As shown in Fig. 1, a headlight 31 is arranged above the front wheel 22 and in a front part of the motorcycle 1. Since the headlight 31 includes a plurality of metal parts in arbitrary positions, the headlight 31 has the property of shielding the electromagnetic wave. As shown in Fig. 2, the headlight 31 includes a case part 31a, a left headlight part 31b, and a right headlight part 31c. As such, since the headlight 31 has a configuration in which a light irradiation part is separated to the left and right, the headlight 31 has an area where the light is not irradiated between the left headlight part 31b and the right head light part 31c.

The case part 31a is supported by the body frame 10 via a mounting bracket (mounting part, not shown). The left headlight part 31b and the right headlight part 31c are mounted to the case part 31a.

The left headlight part 31b and the right headlight part 31c are symmetrical with respect to a line passing through the center of the motorcycle 1 as a symmetry line, in a front view (Fig. 2) and a plan view (Fig. 3). In the front view, each upper part (upper side) of the left headlight part 31b and the right headlight part 31c is configured to approach outward in the left-right direction (that is, so as to have a large space therebetween) as approaching upward. Each outer end (end side) in the left-right direction of the left headlight part 31b and the right headlight part 31 c is inclined so as to approach outward in the left-right direction as approaching upward. Accordingly, in the case part 31a, its center in the left-right direction is recessed downward. In the plan view, the left headlight part 31b and the right headlight part 31c are configured to approach outward in the left-right direction (that is, so as to have a large space therebetween) as approaching rearward.

Each of the left headlight part 31b and the right headlight part 31c has an illuminant (not shown), a reflector 311, and a cover 312. The illuminant is a device, such as an incandescent lamp, a halogen bulb, a HID (High-Intensity Discharge) lamp, LED (Light Emitting Diode), etc. which emit the light by using the power. The reflector 311 is formed of a plurality of reflecting plates arranged at various angles, and irradiates the light in a predetermined direction and a predetermined range, by reflecting the light emitted by the illuminant. The cover 312 is arranged on a surface of the motorcycle 1. The cover 312 protects the illuminant and the reflector 311. The cover 312 is a transparent member (lens) that transmits the light. The light reflected by the reflector 311 passes through the cover 312 and goes forward.

A wind shield 32 is arranged above a rear part of the headlight 31. The wind shield 32 guides a running wind, which can prevent the driver from receiving the running wind. Therefore, the wind shield 32 is arranged so as to extend rearward and obliquely upward from a lower end (proximal end). A shield stay 33 is fixed to a lower end of the wind shield 32. The shield stay 33 is supported by the body frame 10 via the mounting bracket similar to headlight 31.

A meter device 34 capable of displaying a vehicle speed, an engine speed, and a warning information etc. is arranged rearward of the wind shield 32. A steering handle 35 is arranged further rearward of the meter device 34. The steering handle 35 is rotated by the driver, which makes the front fork 21 to be rotated. Thereby, the motorcycle 1 can be turned.

A fuel tank 41 for storing fuel to be supplied to the engine 40 is arranged rearward of the steering handle 35, and above the engine 40. A front seat 42 for being sat by the driver is arranged rearward of the fuel tank 41. A front step 43 for placing foot of the driver who sits on the front seat 42 is arranged below the front seat 42. The driver sits on the front seat 42, sandwiches the fuel tank 41 and its lower part with one's own legs, and puts one's own foot on the front step 43. Thereby, steering is partly performed by moving the center of gravity from side to side, while stabilizing the driver's body.

A rear seat 44 for being sat by a passenger is arranged rearward of the front seat 42. The rear seat 44 is arranged above the above-described rear frame cover 27. A taillight 46 is arranged rearward of the rear frame cover 27. Since the taillight 46 includes a plurality of metal parts in arbitrary positions, the taillight 46 has the property of shielding the electromagnetic wave.

The motorcycle 1 includes a front cowl 51 and a side cowl 52, as shown in Fig. 1. The front cowl 51 is arranged mainly in a front vehicle body, specifically, in a portion for covering the periphery of the headlight 31 and the proximal end of the wind shield 32, etc. The side cowl 52 is arranged mainly in a side vehicle body, specifically, arranged below the steering handle 35 and below the fuel tank 41, etc., as shown in Fig. 1. Since the front cowl 51 and the side cowl 52 of this embodiment are made of resin, they have the property of transmitting the electromagnetic wave.

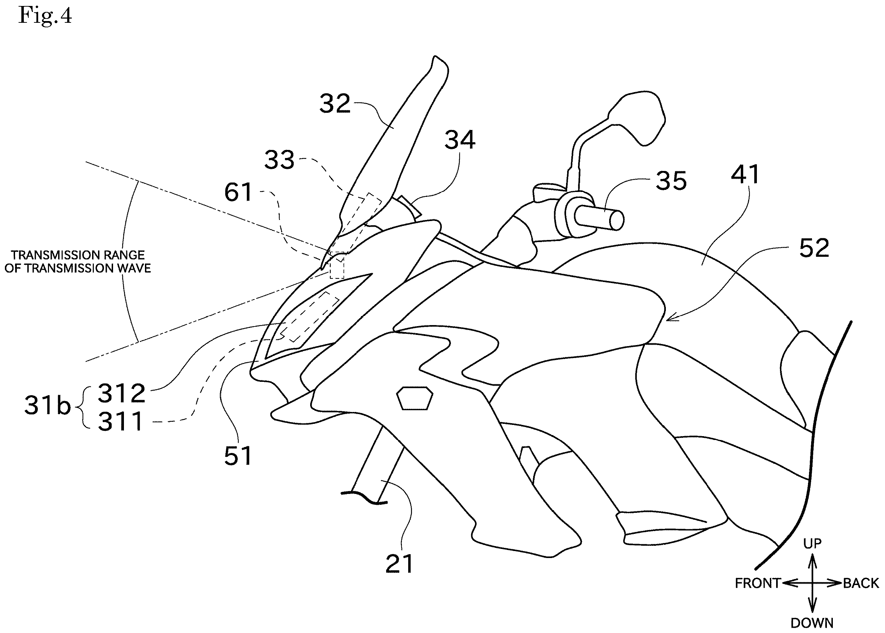

As shown in Fig. 1 to Fig. 3, a front radar device 61 is arranged near the headlight 31, in a portion covered by the front cowl 51. As shown in Fig. 1, a rear radar device 62 is arranged near the taillight 46, in a portion covered by the rear frame cover 27. The front radar device 61 and the rear radar device 62 irradiate a transmission wave (electromagnetic wave) and receive a reflected wave (electromagnetic wave) in which the transmission wave is reflected on the object. The front radar device 61 sends the transmission wave forward. Specifically, the front radar device 61 has a range in the left-right direction as shown in Fig. 3, and transmits the transmission wave having a range in the vertical direction forward, as shown in Fig. 4. The rear radar device 62 transmits the transmission wave rearward. The transmission wave transmitted by the rear radar device 62 has the range in the left-right direction and the range in the vertical direction, as with the front radar device 61.

The front radar device 61 and the rear radar device 62 have an arithmetic unit for analyzing information regarding the received reflected wave, respectively. The arithmetic unit calculates a distance to the object, based on a time from transmission of the transmission wave to reception of the reflected wave. The arithmetic unit calculates a direction of the object, based on the direction where the reflected wave is received. As described above, the arithmetic unit calculates a position of the object existing in front of or in the rear of the motorcycle 1. The arithmetic unit can also calculate a relative speed of the object with respect to the motorcycle 1, based on a change in the distance to the object. The front radar device 61 and the rear radar device 62 send the position of the calculated object to the meter device 34 and an engine control unit, etc. The reflected wave may be analyzed by the arithmetic unit such as the meter device 34 and the engine control unit, etc., not by the front radar device 61 and the rear radar device 62.

The meter device 34 displays the surrounding objects detected by the front radar device 61 and the rear radar device 62. For example, when the distance to the front or rear objects is equal to or less than a predetermined distance, a warning can be given to the meter device 34. When the distance to the front object is equal to or less than the predetermined distance, in addition to the warning or instead of the warning, the engine control unit can control to reduce the vehicle speed by operating the brake. The information of the objects on the outer side in the left-right direction and the objects in the rear part (the presence or absence and the speed of the object) is displayed on the meter device 34, which can assist a safety confirmation in a lane change.

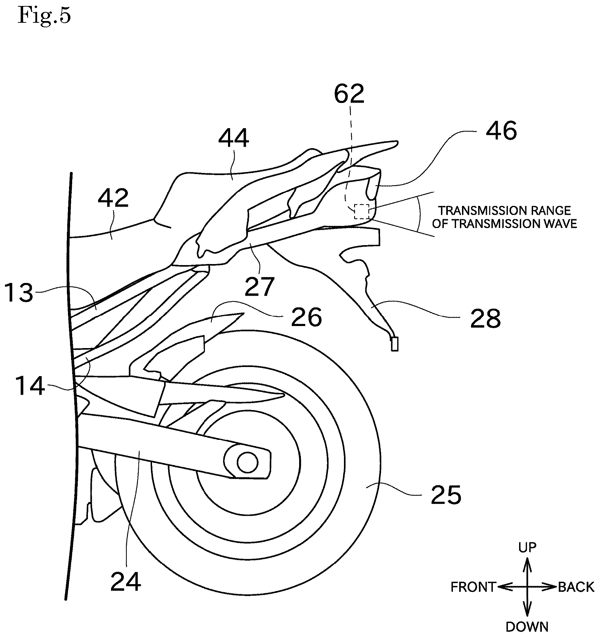

Here, metal parts are used in the motorcycle 1 at various positions. However, the transmission wave that is transmitted by the front radar device 61 and the rear radar device 62, and the reflected wave that is received by them cannot pass through a member which shields the electromagnetic wave such as metal (or the amplitude extremely decreases). In particular, in this embodiment, since the transmission wave having the range in the left-right direction and in the vertical direction is transmitted, the transmission wave is likely to be shielded. Therefore, it is necessary to arrange the front radar device 61 and the rear radar device 62 at appropriate positions. In the following, an arrangement of the front radar device 61 and the rear radar device 62 and their surrounding configurations will be further specifically described with reference to Fig. 4 and Fig. 5.

The front radar device 61 is provided with a transmission/reception portion for transmitting the transmission wave and receiving the reflected wave. Specifically, as shown in Fig. 4, a portion in a front surface of the front radar device 61 excluding its upper part is the transmission/reception part. As shown in Fig. 1, a position of the front radar device 61 in the front-back direction is arranged rearward of a front end of the headlight 31, rearward of an axle of the front wheel 22 (that is, a lower end of the front fork), overlaps the shield stay 33 and the headlight 31, forward of the center of the wind shield 32, and forward of the meter device 34.

As described above, since it is not preferable that the metal parts are arranged in front of the front radar device 61, it is preferable that the front radar device 61 is arranged forward as far as possible. However, as shown in Fig. 4, since the upper surface of the front cowl 51 of this embodiment is inclined so as to approach downward as approaching the front, a space for arranging the parts is small in the vicinity of the front end of the front cowl 51. Furthermore, since the headlight 31 including the metal parts is arranged in the vicinity of the front end of the front cowl 51, it is difficult to arrange the front radar device 61.

Therefore, as described above, the front radar device 61 is arranged in a portion slightly rearward from the front end. The front cowl 51 has a front protruding shape (specifically, a shape in which the size in the vertical direction and the left-right direction decreases as approaching the front). Therefore, since there is a space between the meter device 34 and the front end of the front cowl 51, this space can be utilized to arrange the front radar device 61. In particular, in this embodiment, harnesses connected to the headlight 31 and the meter device 34 are arranged forward of the meter device 34. Therefore, the harness connected to the front radar device 61 can be easily arranged together with these harnesses. The harness connected to the front radar device 61 may be connected to its lower part, its upper part, or its rear part.

The front radar device 61 in the left-right direction is positioned in the center of the motorcycle 1 in the left-right direction. In other words, as shown in Fig. 2 and the like, the front radar device 61 is arranged between the front forks 21 arranged in pairs on the left and right, between the left headlight part 31b and the right headlight part 31c, in the center of the case part 31a in the left-right direction, and between the shield stays 33 arranged in pairs on the left and right. The front radar device 61 is arranged in the center in the left-right direction, which can evenly detect both left and right sides.

As shown in Fig. 1 and the like, the front radar device 61 in the vertical direction is positioned above the front wheel 22 and the front fender 23, overlaps the headlight 31 (specifically, positioned above the reflector 311 and the cover 312, but overlaps the case part 31a), overlaps the shield stay 33, overlaps the fuel tank 41, and positioned below the meter device 34. Although the position of the front radar device 61 in the vertical direction overlaps the headlight 31 (the case part 31a), the front radar device 61 is arranged in a portion where the center of the case part 31a in the left-right direction is recessed downward. Therefore, in a front view, the front radar device 61 and the headlight 31 are not overlapped with each other. Since the front radar device 61 is arranged so as to be sandwiched between the shield stays 33 in pairs on the left and right, the positions of the front radar device 61 and the shield stay 33 can be approached to each other. Therefore, the shield stay 33 and front radar device 61 are easily mounted to a common mounting bracket. The space surrounded by the shield stays 33 in pairs on the left and right can be effectively utilized.

As described above, the headlight 31 is configured such that the space between the left headlight part 31b and the right headlight part 31c increases as approaching rearward, in the plan view (Fig. 3). The front radar device 61 is arranged between the left headlight part 31b and the right headlight part 31c, in the plan view. As described above, since the front radar device 61 is arranged above the left headlight part 31b and the right headlight part 31c, the front radar device 61 is not covered by the left headlight part 31b and the right headlight part 31c. However, for example, the harness of the front radar device 61 may pass through an area surrounded by the left headlight part 31b and the right headlight part 31c, the mounting bracket for mounting the front radar device 61 may be positioned on such area, or a portion of the front radar device 61 other than the transmission/reception portion thereof may be positioned on such area.

As such, the front radar device 61 is arranged at a position avoiding the headlight 31 including the metal parts. Therefore, in the front view (frontal view), the front radar device 61 is arranged at a position deviated from the area where the headlight 31 is projected to the front side (hereinafter referred to as the front projection area of the headlight 31). In this embodiment, although the entire front radar device 61 is arranged at a position deviated from the front projection area of the headlight 31, the transmission/reception portion of the front radar device 61 for transmitting and receiving the electromagnetic wave is merely deviated from the front projection area of the headlight 31. In this embodiment, although the transmission wave to be transmitted has the range in the vertical direction and the left-right direction, the front radar device 61 is arranged such that the headlight 31 does not receive the transmission wave that is transmitted in all ranges (except for weak electromagnetic wave that is not used for detecting the obj ect). Accordingly, the electromagnetic wave that is transmitted and received by the front radar device 61 is not shielded by the headlight 31.

The front radar device 61 is arranged inside the front cowl 51. Specifically, the front cowl 51 covers the outside of the front radar device 61 in the left-right direction (in other words, in the side view, the front cowl 51 overlaps the front radar device 61), and the front cowl 51 covers the front of the front radar device 61 (in other words, in the front view, the front cowl 51 overlaps the front radar device 61). Therefore, the front cowl 51 covers all of the transmission ranges of the transmission wave of the front radar device 61. As described above, the front cowl 51 is made of the material that transmits the electromagnetic wave. Paints etc. of the front cowl 51 do not contain metal powder. Therefore, the electromagnetic wave can be transmitted and received through the front cowl 51.

The front radar device 61 is covered with the front cowl 51, which can protect the front radar device 61 from water and mud, etc. The front radar device 61 is covered with the front cowl 51, which can also protect the front radar device 61 from theft, etc. Furthermore, the appearance of the motorcycle 1 can be simplified.

As shown in Fig. 5, the rear radar device 62 in the vertical direction is positioned below the taillight 46, and its position overlaps the rear frame 13. The rear radar device 62 is positioned above the rear fender 26 and the rear flap 28. In the front-back direction, although the taillight 46 is arranged rearward of the rear radar device 62, the rear radar device 62 is positioned below the taillight 46. Therefore, in the rear view, the area where the taillight 46 is projected to the rear side (the rear projection area of the taillight 46) does not overlap the rear radar device 62. Therefore, the transmission wave that is transmitted by the rear radar device 62 is not shielded by the taillight 46 (except for weak electromagnetic wave that is not used for detecting the object). Accordingly, the electromagnetic wave that is transmitted and received by the rear radar device 62 is not shielded by the headlight 31.

Although the position of the rear radar device 62 in the vertical direction overlaps the rear frame 13, the rear radar device 62 is arranged rearward of the rear frame 13. Therefore, the transmission wave that is transmitted by the rear radar device 62 is not shielded by the rear frame 13. As described above, the transmission wave that is transmitted by the rear radar device 62 has the range in the vertical direction. In this embodiment, the transmission wave does not interfere with the rear flap 28. Even when the transmission wave interferes with the rear flap 28, the rear flap 28 is made of the material that transmits the electromagnetic wave, and therefore a detection range of the objects is not reduced.

As such, the rear radar device 62 is arranged at a position avoiding the taillight 46 including the metal parts, and the rear frame 13. The rear radar device 62 is arranged inside the rear frame cover 27. Specifically, the rear frame cover 27 covers the outside of the rear radar device 62 in the left-right direction (in other words, in the side view, the rear frame cover 27 overlaps the rear radar device 62), and the rear frame cover 27 covers the rear side of the rear radar device 62 (in other words, in the rear view, the rear frame cover 27 overlaps the rear radar device 62). Therefore, the rear frame cover 27 covers all of the transmission ranges of the transmission wave of the rear radar device 62. As described above, the rear frame cover 27 is made of the material that transmits the electromagnetic wave. Paints etc. of the rear frame cover 27 does not contain metal powder. Therefore, the electromagnetic wave can be transmitted and received through the rear frame cover 27.

As described above, the motorcycle 1 of this embodiment includes the headlight 31, the taillight 46, and the radar devices (the front radar device 61, the rear radar device 62). The headlight 31 includes a part of a material that shields the electromagnetic wave. The taillight 46 includes a part of the material that shields the electromagnetic wave. The radar device transmits the transmission wave, which is the electromagnetic wave for detecting the surroundings, from the transmission/reception portion, and receives the reflected wave that is reflected by the object at the transmission/reception portion. The transmission/reception portion of the radar device is covered by the member with the material that transmits the electromagnetic wave, at least in the range where the transmission wave is transmitted. When the radar device is arranged forward of the center in the front-back direction, in the front view, the radar device is arranged outside the front projection area of the headlight 31. When the radar device is arranged rearward of the center in the front-back direction, in the rear view, the radar device is arranged outside the rear projection area of the taillight 46.

Accordingly, the radar device is covered by the member with the material that transmits the electromagnetic wave, which can protect the radar device from water and mud, etc. without degrading the function of the radar device. An influence on the transmission wave of the radar device can be prevented by a part of material that shields the electromagnetic wave of the headlight 31 and the taillight 46.

The motorcycle 1 of this embodiment includes the front radar device 61 and the front cowl 51. The front radar device 61 is a radar device for transmitting the transmission wave forward. The front cowl 51 is made of the material that transmits the electromagnetic wave. The front radar device 61 is covered with the front cowl 51.

The front radar device 61 is covered with the front cowl 51 and thereby a case for protecting the front radar device 61 is omitted. This can prevent an increase in the number of parts. Alternatively, a case for protecting the front radar device 61 is simplified, which can reduce the cost and prevent the front radar device 61 from affecting the appearance of the motorcycle 1.

In the motorcycle 1 of this embodiment, the headlight 31 includes the left headlight part 31b that is arranged on the left side and the right headlight part 31c that is arranged on the right side. In the front view, the headlight 31 has its upper part that is configured to have a large space between the left headlight part 31b and the right headlight part 31c as approaching upward. The transmission/reception portion of the front radar device 61 is arranged between the left headlight part 31b and the right headlight part 31c, or above them.

Accordingly, the space between the left headlight part 31b and the right headlight part 31c in the front view is effectively utilized. Thereby, the front radar device 61 can be arranged such that the transmission range of the transmission wave does not overlap the headlight 31.

In the motorcycle 1 of this embodiment, the headlight 31 is configured to such that the space between the left headlight part 31b and the right headlight part 31c increases as approaching rearward, in the plan view. The front radar device 61 is arranged between the left headlight part 31b and the right headlight part 31c.

Accordingly, the front radar device 61 is arranged relatively forward, which can easily achieve a layout in which the member with the material that shields the electromagnetic wave is not arranged forward of the front radar device 61.

In the motorcycle 1 of this embodiment, in the side view, the transmission/reception portion of the front radar device 61 does not overlap the headlight 31.

Accordingly, even when the front radar device 61 transmits the transmission wave that extends in the left-right direction, the transmission wave is not shielded by the headlight 31.

The motorcycle 1 of this embodiment includes the meter device 34 that displays at least the vehicle speed. In the side view, the transmission/reception portion of the front radar device 61 is arranged forward of the meter device 34.

Accordingly, the front radar device 61 is arranged in a portion where the space is relatively easily secured.

The motorcycle 1 of this embodiment includes the rear radar device 62 as a radar device that transmits the transmission wave rearward. In the rear view, the transmission/reception portion of the rear radar device 62 is arranged below the taillight 46.

Accordingly, the transmission/reception portion of the rear radar device 62 can be arranged in a portion where the space is relatively easily secured.

The motorcycle 1 of this embodiment includes the rear flap 28 that is provided below the taillight 46. The transmission/reception portion of the rear radar device 62 is arranged between the taillight 46 and the rear flap 28.

Accordingly, the rear radar device 62 and the member for covering the rear radar device 62 can be protected from water and mud, etc.

The motorcycle 1 of this embodiment includes the rear frame cover 27 that is provided with the taillight 46. The rear radar device 62 is arranged inside the rear frame cover 27.

Accordingly, the rear frame cover 27 is less likely to be vibrated as compared with the rear flap 28, etc., for example, which can prevent vibration of the rear radar device 62. The rear radar device 62 is arranged inside the rear frame cover 27, which can omit or simplify the case for protecting the rear radar device 62.

Although a preferred embodiment of the present invention has been described above, the above-described configuration can be modified, for example, as follows.

<Material that shields/transmits the electromagnetic wave> In the above-described embodiment, each of the front radar device 61 and the rear radar device 62 has a configuration in which the transmission range of the transmission wave is covered with resin (the front cowl 51 and the rear frame cover 27), and not covered with metal (the headlight 31 and the taillight 46). However, the front radar device 61 and the rear radar device 62 may be covered with the material other than resin, which transmits the electromagnetic wave. It is preferable that the front radar device 61 and the rear radar device 62 are not covered with the material other than metal, which shields the electromagnetic wave.

<Arrangement of the front radar device 61> In the above-described embodiment, although the front radar device 61 is arranged above the headlight 31, the front radar device 61 may be below the headlight 31. When the space between the front parts of the left headlight part 31b and the right headlight part 31c is large, the front radar device 61 may be arranged therebetween (that is, at the same height as the headlight 31). The front radar device 61 may be covered with another member (for example, a storage casing for storing the front radar device 61).

<Arrangement of the rear radar device 62> In the above-described embodiment, although the rear radar device 62 is mounted to the rear frame cover 27 which is the same member as the taillight 46, the rear radar device 62 may be mounted to another portion. For example, the rear radar device 62 may be mounted to the rear flap 28. The storage casing may be mounted between the rear frame cover 27 and the rear flap 28, and then the rear radar device 62 may be arranged inside the storage casing. Even in this case, preferably, the storage casing is not fixed to the rear flap 28 side, but fixed to the rear frame cover 27 side, in consideration of vibration resistance.

<Characteristics of the front radar device 61 and rear radar device 62> In the above-described embodiment, although each of the front radar device 61 and the rear radar device 62 has the range in the vertical direction and the left-right direction, the configuration having high directivity in the front-back direction may be acceptable. In this case, the front radar device 61 detects only the front of the motorcycle 1, and does not detect the left front side and right front side of the motorcycle 1 as a detection target. Likewise, the rear radar device 62 detects only the rear side of the motorcycle 1, and does not detect the left rear side and right rear side of the motorcycle 1 as the detection target.

<Applicability of the present invention> In the above-described embodiment, although an example in which a sports tourer type motorcycle is applied to the present invention is described, the present invention can be also applied to other motorcycles (an off-road type, a naked type, a cruise type, a sports type, etc.). Either presence or absence of the side cowl 52 may be acceptable, or the front cowl 51 and the side cowl 52 may have different shape.

### DESCRIPTION OF THE REFERENCE NUMERALS

- 1: motorcycle
- 10: body frame
- 31: headlight
- 46: taillight
- 61: front radar device (radar device)
- 62: rear radar device (radar device)

## Claims

1. A motorcycle (1) comprising:
a headlight (31) including a part of material that shields an electromagnetic wave;
a taillight (46) including a part of material that shields the electromagnetic wave; and
a front radar device (61) that transmits a transmission wave, which is the electromagnetic wave for detecting the surroundings, forward from a transmission/reception portion, and receives a reflected wave that is reflected by an object at the transmission/reception portion, wherein
the transmission/reception portion of the front radar device (61) is covered by a member with a material that transmits the electromagnetic wave, at least in a range where the transmission wave is transmitted,
when the front radar device (61) for transmitting the transmission wave forward is arranged, in a front view, the front radar device (61) is arranged outside a front projection area of the headlight (31),
wherein the motorcycle (1) further comprises:
the front radar device (61) as the radar device for transmitting the transmission wave forward; and
a front cowl (51) with the material that transmits the electromagnetic wave, **characterized in that** the front radar device (61) is covered by the front cowl (51),
wherein
a position of the front radar device (61) in the front-back direction is arranged rearward of a front end of the headlight (31), rearward of an axle of a front wheel (22), overlaps a shield stay (33) and the headlight (31), forward of the center of a wind shield (32), and forward of a meter device (34).

2. The motorcycle according to claim 1, wherein
the headlight (31) includes a left headlight part (31b) arranged in a left side, and a right headlight part (31c) arranged in a right side,
in the front view, the headlight (31) has its upper part that is configured to have a larger space between the left headlight part (31b) and the right headlight part (31c) as approaching upward,
in the front view, the transmission/reception portion of the front radar device (61) is arranged between the left headlight part (31b) and the right headlight part (31c), or above them.

3. The motorcycle according to claim 2, wherein
in the plan view, the headlight (31) is configured to have a larger space between the left headlight part (31b) and the right headlight part (31c) as approaching rearward, in the plan view, the front radar device (61) is arranged between the left headlight part (31b) and the right headlight part.

4. The motorcycle (1) according to claims 1 to 3, wherein
in the side view, the transmission/reception portion of the front radar device (61) does not overlap the headlight (31).

5. The motorcycle (1) according to any one of claims 1 to 4, wherein
the meter device (34) that displays at least a vehicle speed is provided, in the side view, the transmission/reception portion of the front radar device (61) is arranged forward of the meter device (34).

6. The motorcycle (1) according to any one of claims 1 to 5, wherein
a rear radar device for transmitting the transmission wave rearward is provided,
in the rear view, the transmission/reception portion of the rear radar device (62) is arranged below the taillight.

7. The motorcycle according to claim 6, wherein
a rear flap that is arranged below the taillight is provided,
the transmission/reception portion of the rear radar device (62) is arranged between
the taillight and the rear flap.

8. The motorcycle according to claim 6 or 7, wherein
a rear frame cover in which the taillight is arranged is provided,
the rear radar device (62) is arranged inside the rear frame cover.

## Patentansprüche

1. Ein Motorrad (1) umfassend:
einen Frontscheinwerfer (31) umfassend einen Teil aus einem Material, das elektromagnetische Wellen abschirmt;
eine Rückleuchte (46) umfassend einen Teil aus einem Material, das elektromagnetische Wellen abschirmt; und
eine Frontradarvorrichtung (61), die eine Sendewelle, welche die elektromagnetische Welle zum Erfassen der Umgebung ist, von einem Sende-/Empfangsabschnitt nach vorne sendet und welche eine reflektierte Welle, die durch ein Objekt reflektiert wird, an dem Sende-/Empfangsabschnitt empfängt, wobei
der Sende-/Empfangsabschnitt der Frontradarvorrichtung (61) durch ein Element mit einem Material bedeckt ist, das die elektromagnetische Welle überträgt, zumindest in einem Bereich, in dem die Sendewelle gesendet wird,
wobei, wenn die Frontradarvorrichtung (61) zum Senden der Sendewelle vorne angeordnet ist, die Frontradarvorrichtung (61) außerhalb eines Frontprojektionsbereichs des Frontscheinwerfers (31) angeordnet ist,
wobei das Motorrad (1) ferner umfasst:
die Frontradarvorrichtung (61) als die Radarvorrichtung zum Senden der Sendewelle nach vorne; und
eine Frontabdeckung (51) mit einem Material, das die elektromagnetische Welle überträgt, **dadurch gekennzeichnet, dass**
die Frontradarvorrichtung (61) durch die Frontabdeckung (51) bedeckt ist,
wobei
eine Position der Frontradarvorrichtung (61) in der Vorne-Hinten-Richtung hinter einem vorderen Ende des Frontscheinwerfers (31), hinter einer Achse eines Vorderrads (22), überlappend mit einer Schildstrebe (33) und dem Frontscheinwerfer (31), vor der Mitte des Windschutzes (32) und vor der Messvorrichtung (34).

2. Motorrad nach Anspruch 1, wobei
der Frontscheinwerfer (31) einen linken Frontscheinwerferteil (31b) angeordnet auf der linken Seite und einen rechten Frontscheinwerferteil (31c) angeordnet auf der rechten Seite umfasst,
wobei in der Fronansicht der Frontscheinwerfer (31) einen oberen Teil hat, der ausgebildet ist, bei Annäherung nach oben einen größeren Abstand zwischen dem linken Frontscheinwerferteil (31b) und dem rechten Frontscheinwerferteil (31c) zu haben, wobei in der Frontansicht der Sende-/Empfangsabschnitt der Frontradarvorrichtung (61) zwischen dem linken Frontscheinwerferteil (31b) und dem rechten Frontscheinwerferteil (31c) oder oberhalb dieser angeordnet ist.

3. Motorrad nach Anspruch 2, wobei
in der Draufsicht der Frontscheinwerfer (31) ausgebildet ist, bei Annäherung nach hinten einen größeren Abstand zwischen dem linken Frontscheinwerferteil (31b) und dem rechten Frontscheinwerferteil (31c) zu haben,
in der Draufsicht die Frontradarvorrichtung (61) zwischen dem linken Frontscheinwerferteil (31b) und dem rechten Frontscheinwerferteil angeordnet ist.

4. Motorrad (1) nach einem der Ansprüche 1 bis 3, wobei
in der Seitenansicht der Sende-/Empfangsabschnitt der Frontradarvorrichtung (61) nicht mit dem Frontscheinwerfer überlappt.

5. Motorrad (1) nach einem der Ansprüche 1 bis 4, wobei
die Messvorrichtung, die zumindest die Fahrzeuggeschwindigkeit anzeigt, vorgesehen ist,
wobei in der Seitenansicht der Sende-/Empfangsabschnitt der Frontradarvorrichtung (61) vor der Messvorrichtung angeordnet ist.

6. Motorrad (1) nach einem der Ansprüche 1 bis 5, wobei
eine Rückradarvorrichtung zum Senden der Sendewelle nach hinten vorgesehen ist,
wobei in der Rückansicht der Sende-/Empfangsabschnitt der Rückradarvorrichtung (62) unterhalb der Rückleuchte angeordnet ist.

7. Motorrad nach Anspruch 6, wobei
eine Heckklappe, die unterhalb der Rückleuchte angeordnet ist, vorgesehen ist,
wobei der Sende-/Empfangsabschnitt der Rückradarvorrichtung (62) zwischen der Rückleuchte und der Heckklappe angeordnet ist.

8. Motorrad nach einem der Ansprüche 6 oder 7, wobei
eine hintere Rahmenabdeckung, in der die Rückleuchte angeordnet ist, vorgesehen ist,
wobei die Rückradarvorrichtung (62) innerhalb der hinteren Rahmenabdeckung angeordnet ist.

## Revendications

1. Motocyclette (1) comprenant :
un phare avant (31) comprenant une partie de matériau qui protège d'une onde électromagnétique;
un feu arrière (46) comprenant une partie de matériau qui protège l'onde électromagnétique; et
un dispositif radar avant (61) qui transmet une onde de transmission, qui est l'onde électromagnétique pour détecter l'environnement, vers l'avant à partir d'une partie de transmission/réception, et reçoit une onde réfléchie qui est réfléchie par un objet à la partie de transmission/réception, dans lequel
la partie d'émission/réception du dispositif radar avant (61) est recouverte par un membre avec un matériau qui transmet l'onde électromagnétique, au moins dans une zone où l'onde de transmission est transmise,
lorsque le dispositif radar avant (61) pour transmettre l'onde de transmission vers l'avant est disposé, dans une vue de face, le dispositif radar avant (61) est disposé à l'extérieur d'une zone de projection avant du phare avant (31),
dans lequel la motocyclette (1) comprend en outre:
le dispositif radar avant (61) en tant que le dispositif radar pour transmettre l'onde de transmission vers l'avant; et
**caractérisé par le fait que** le dispositif radar avant (61) est couvert par le capot avant (51),
dans lequel
une position du radar dispositif avant (61) dans la direction avant-arrière est située à l'arrière de l'extrémité avant du phare avant (31), à l'arrière de l'axe d'une roue avant (22), chevauché un support de bouclier (33) et du phare avant (31), à l'avant du centre d'un pare-brise (32) et à l'avant d'un dispositif de mesure (34).

2. Motocyclette selon la revendication 1, dans laquelle
le phare avant (31) comprend une partie de phare avant gauche (31b) disposée sur le côté gauche et une partie de phare avant droit (31c) disposée sur le côté droit,
dans la vue de face, le phare avant (31) a sa partie supérieure qui est configurée pour avoir un espace plus grand entre la partie de phare avant gauche (31b) et la partie de phare avant droit (31c) en s'approchant vers le haut,
dans la vue de face, la partie d'émission/réception du dispositif radar avant (61) est disposée entre la partie de phare avant gauche (31b) et la partie de phare avant droit (31c), ou au-dessus d'elles.

3. Motocyclette selon la revendication 2, dans laquelle
dans la vue en plan, le phare avant (31) est configuré pour avoir un espace plus grand entre la partie de phare avant gauche (31b) et la partie de phare avant droit (31c) en s'approchant vers l'arrière,
dans la vue en plan, le dispositif radar avant (61) est disposé entre la partie de phare avant gauche (31b) et la partie de phare avant droit.

4. Motocycle (1) selon les revendications 1 à 3, dans lequel
en vue latérale, la partie d'émission/réception du dispositif radar avant (61) ne chevauche pas le phare avant (31).

5. Motocycle (1) selon les revendications 1 à 4, dans lequel
le dispositif de mesure (34) affichant au moins la vitesse du véhicule est fourni,
dans la vue latérale, la partie d'émission/réception du dispositif radar avant (61) est disposée à l'avant du dispositif de mesure (34).

6. Motocycle (1) selon l'une des revendications 1 à 5, dans lequel
un dispositif radar arrière est prévu pour transmettre l'onde de transmission vers l'arrière,
dans la vue arrière, la partie d'émission/réception du dispositif radar arrière (62) est disposée sous le feu arrière.

7. Motocycle selon la revendication 6, dans lequel
un volet arrière est disposé sous le feu arrière,
la partie d'émission/réception du dispositif radar arrière (62) est disposée entre le feu arrière et le volet arrière.

8. Motocycle selon la revendication 6 ou 7, dans lequel
un couvercle de cadre arrière dans lequel le feu arrière est disposé est prévu,
le dispositif radar arrière (62) est placé à l'intérieur du couvercle du cadre arrière.
